# EUROPÄISCHE PATENTANMELDUNG

(11) **EP 4 521 015 A1**
(43) Veröffentlichungstag der Anmeldung: **12.03.2025**
(21) Anmeldenummer: 24197798.2
(22) Anmeldetag: 02.09.2024
(51) Int. Cl.: F16P 3/10, F16P 3/14, F16P 3/02, B65H 49/00, E05B 17/00

(54) **INDUSTRIEMASCHINE MIT ENTRIEGELUNGSERKENNUNG FÜR SCHUTZEINRICHTUNGEN**

(30) Priorität: 06.09.2023 DE 102023123924
(71) Anmelder: MULTIVAC Sepp Haggenmüller SE & Co. KG, 87787 Wolfertschwenden (DE)
(72) Erfinder: Steigerwald, Frank, 87700 Memmingen (DE)
(74) Vertreter: Grünecker Patent- und Rechtsanwälte PartG mbB

(57) **Zusammenfassung**

Eine Industriemaschine, die eingerichtet ist zur Lebensmittelverarbeitung oder als Verpackungsmaschine, weist eine bewegliche Schutzeinrichtung (220) eine Verriegelungseinrichtung (240) und einen Sensor (250) auf. Die bewegliche Schutzeinrichtung (220) kann von einem geschlossenen Zustand in einen offenen Zustand bewegt werden und ist dazu eingerichtet, in dem geschlossenen Zustand einen Bediener der Industriemaschine von einer Gefahrenquelle (210) der Industriemaschine physisch zu trennen. Die Verriegelungseinrichtung kann zwischen einer verriegelten Stellung und einer entriegelten Stellung umgeschaltet werden und ist dazu eingerichtet, in der verriegelten Stellung die bewegliche Schutzeinrichtung im geschlossenen Zustand zu halten und in der entriegelten Stellung die Bewegung der Schutzeinrichtung vom geschlossenen Zustand in den offenen Zustand zuzulassen. Der Sensor (250) ist eingerichtet, die Stellung der Verriegelungseinrichtung (240) zu erfassen und ein Entriegelungssignal an ein Sicherheitsmodul (260) zu übertragen, wenn die Verriegelungseinrichtung von der verriegelten Stellung in die entriegelte Stellung umgeschaltet wird. Die Industriemaschine ist dazu eingerichtet, um ein von dem Sicherheitsmodul in Reaktion auf das Entriegelungssignal erzeugtes Steuersignal zu verarbeiten, wobei das Verarbeiten des Steuersignals das Ausführen einer Sicherheitsfunktion umfasst.

## Beschreibung

Die vorliegende Erfindung betrifft eine Industriemaschine gemäß dem Anspruch 1 und einem Verfahren zum Betrieb einer entsprechenden Industriemaschine gemäß dem Anspruch 16.

Industriemaschinen, z.B. Lebensmittelverarbeitungsmaschinen oder Verpackungsmaschinen, fertigen in einem wenigstens teilweise automatischen Verfahren Arbeitsprodukte. Solche Arbeitsprodukte können Backwaren, Teiglinge, Produktverpackungen oder fertig verpackte Gegenstände, z.B. Lebensmittel oder Medikamente sein. Obwohl die Fertigung oft zu großen Teilen automatisch erfolgt, können bestimmte Arbeitsschritte in dem Fertigungsverfahren, das von der Industriemaschine meist in mehreren Arbeitsstationen ausgeführt wird, menschliche Mitwirkung erfordern. Zudem kann die Einrichtung, Umstellung, oder Wartung der Maschine unter Umständen die Interaktion von Menschen mit der laufenden Industriemaschine erfordern. Wenn menschliche Bediener in Kontakt mit der Industriemaschine kommen, besteht oft eine nicht unerhebliche Verletzungsgefahr für die Bediener. Die Verletzungsgefahr kann von einer bewegten Komponente der Industriemaschine ausgehen, die Gliedmaßen von Bedienern einquetschen oder abtrennen kann. Andere Verletzungsgefahren können von elektrischen Bauteilen ausgehen oder von Teilen der Maschine, die besonders kalt oder heiß sind. Solche für einen Menschen gefährlichen Bauteile einer Industriemaschine stellen Gefahrenquellen da, vor denen ein Bediener der Industriemaschine geschützt werden muss.

Üblicherweise werden zu diesem Zweck Schutzeinrichtungen in Industriemaschinen vorgesehen, die verhindern, dass ein Bediener in ein gefährliches Bauteil eingreift. Dabei kann es sich beispielsweise um eine Abdeckung des Werkzeugbereichs der Industriemaschine handeln, die verhindert, dass ein Bediener mit einem bewegten und eventuell scharfen oder heißen Werkzeug in Berührung kommt. Ein weiteres Beispiel einer entsprechenden Schutzvorrichtung ist eine Verkleidung einer Industriemaschine, die den Eingriff eines Bedieners in einen Motor, ein Getriebe oder in elektrische Bauteile verhindert.

In manchen Fällen müssen solche Schutzeinrichtungen geöffnet oder entfernt werden können, etwa bei Werkzeug- oder Produktumstellungen der Industriemaschine oder bei Wartungs-, Reparatur- oder Diagnosearbeiten. Im geöffneten Zustand ist die Schutzwirkung der Schutzeinrichtung jedoch mindestens verringert, in vielen Fällen sogar völlig aufgehoben. Um die Verletzungsgefahr für den Bediener möglichst gering zu halten, sind im Stand der Technik Industriemaschinen bekannt, die über einen Sensor ermitteln, dass eine Schutzvorrichtung nicht mehr oder nur noch teilweise vorhanden ist, z.B. weil sie geöffnet oder entfernt wurde. Die Industriemaschine reagiert auf ein entsprechendes Signal des Sensors mit zusätzlichen Schutzmaßnahmen, um die Gefahr einer Verletzung für den Bediener zu verringern. Die Schutzmaßnahmen werden im Stand der Technik erst eingeleitet, wenn die Schutzeinrichtung schon einen Teil ihrer Schutzwirkung verloren hat, nämlich erst nach dem Beginn des Öffnungsvorgangs. Das bedeutet, dass bereits eine erhöhte Gefahrensituation eingetreten ist, wenn die Industriemaschine die zusätzlichen Schutzmaßnahmen einleitet. Erschwerend kommt hinzu, dass die Schutzmaßnahmen unter Umständen eine gewisse Zeit benötigen, um Ihre volle Schutzwirkung zu entfalten. Ein Bediener kann daher bereits in die Gefahrenquelle eingreifen und verletzt werden, bevor die Schutzmaßnahmen vollständig greifen.

Aufgabe der vorliegenden Erfindung ist die Verbesserung der Sicherheit einer Industriemaschine, insbesondere solcher Industriemaschinen, die zur Lebensmittelverarbeitung oder als Verpackungsmaschine verwendet werden. In der vorliegenden Erfindung wird die Absicht, dass eine Schutzeinrichtung geöffnet werden soll, bereits zu einem früheren Zeitpunkt ermittelt, so dass Sicherheitsfunktionen bereits ausgelöst werden können, bevor die Schutzeinrichtung tatsächlich geöffnet wird und mehr Zeit zur für die Ausführung der Sicherheitsfunktionen zur Verfügung steht, um eventuelle Verletzungsgefahren für einen Bediener zu verringern. Damit weist eine erfindungsgemäße Industriemaschine eine hohe Sicherheit für Bediener im Umgang mit der Maschine auf, selbst wenn eine Schutzeinrichtung entfernt oder geöffnet wird. Durch die verbesserte Sicherheit kann in manchen Fällen das vollständige Abschalten und das damit verbundene eventuell zeitaufwändige Wiederhochfahren der Industriemaschine vermieden werden, ohne die Sicherheit derjenigen Personen zu gefährden, die an der Maschine arbeiten oder die Wartungen an der Maschine durchführen. Neben der Sicherheit wird daher auch die Effizienz der Maschine erhöht.

Diese Aufgabe wird gelöst durch eine Verpackungsmaschine gemäß Anspruch 1 oder durch ein Verfahren zum Betrieb einer Verpackungsmaschine gemäß Anspruch 16.

Vorteilhafte Weiterbildungen der Erfindung sind durch die jeweiligen Gegenstände der Unteransprüche gegeben.

Die vorliegende Erfindung bezieht sich auf eine Industriemaschine, die eingerichtet ist zur Lebensmittelverarbeitung oder als Verpackungsmaschine. Die Industriemaschine weist eine bewegliche Schutzeinrichtung, eine Verriegelungseinrichtung und einen Sensor auf. Die bewegliche Schutzeinrichtung kann von einem geschlossenen Zustand in einen offenen Zustand bewegt werden und ist dazu eingerichtet, in dem geschlossenen Zustand einen Bediener der Industriemaschine von einer Gefahrenquelle der Industriemaschine physisch zu trennen. Die Verriegelungseinrichtung kann zwischen einer verriegelten Stellung und einer entriegelten Stellung umgeschaltet werden. Die Verriegelungseinrichtung ist dazu eingerichtet, in der verriegelten Stellung die bewegliche Schutzeinrichtung im geschlossenen Zustand zu halten und in der entriegelten Stellung die Bewegung der Schutzeinrichtung vom geschlossenen Zustand in den offenen Zustand zuzulassen. Der Sensor ist eingerichtet, um die Stellung der Verriegelungseinrichtung zu erfassen und ein Entriegelungssignal an ein Sicherheitsmodul zu übertragen, wenn bzw. sobald die Verriegelungseinrichtung von der verriegelten Stellung in die entriegelte Stellung umgeschaltet wird. Die Industriemaschine ist eingerichtet, um ein von dem Sicherheitsmodul in Reaktion auf das Entriegelungssignal erzeugtes Steuersignal zu verarbeiten, wobei das Verarbeiten des Steuersignals das Ausführen einer Sicherheitsfunktion umfasst.

Die Erfindung bezieht sich weiterhin auf ein Verfahren zum Betrieb einer Industriemaschine, die eingerichtet ist zur Lebensmittelverarbeitung oder als Verpackungsmaschine. Die erfindungsgemäße Industriemaschine weist eine Schutzeinrichtung, eine Verriegelungseinrichtung, und einen Sensor auf. Die Schutzeinrichtung kann von einem geschlossenen Zustand in einen offenen Zustand bewegt werden und die Verriegelungseinrichtung kann zwischen einer verriegelten Stellung und einer entriegelten Stellung umgeschaltet werden. Der Sensor ist eingerichtet, die Stellung der Verriegelungseinrichtung zu erfassen.

Erfindungsgemäß umfasst das Verfahren das Entriegeln der Verriegelungseinrichtung, wobei sich die Schutzeinrichtung in dem geschlossenen Zustand befindet und einen Bediener der Industriemaschine von einer Gefahrenquelle der Industriemaschine physisch trennt. Das Entriegeln umfasst ein Umschalten der Verriegelungseinrichtung von der verriegelten Stellung in die entriegelte Stellung, wobei die Verriegelungseinrichtung in der verriegelten Stellung die Schutzeinrichtung im geschlossenen Zustand hält und in der entriegelten Stellung die Bewegung der Schutzeinrichtung von dem geschlossenen Zustand in den offenen Zustand zulässt. Das erfindungsgemäße Verfahren umfasst weiterhin das Erfassen des Umschaltens der Verriegelungseinrichtung von der verriegelten Stellung in die entriegelte Stellung durch den Sensor, das Übertragen eines Entriegelungssignals von dem Sensor an ein Sicherheitsmodul in Reaktion auf das Erfassen des Umschaltens, und das Verarbeiten eines von dem Sicherheitsmodul in Reaktion auf das Entriegelungssignal erzeugten Steuersignals, wobei das Verarbeiten des Steuersignals das Ausführen einer Sicherheitsfunktion umfasst.

Das Sicherheitsmodul kann als Hardware, als Software oder Kombination von Hardware und Software implementiert sein. Das Sicherheitsmodul kann als Bestandteil der Industriemaschine ausgeführt sein, so dass die Industriemaschine das Sicherheitsmodul umfasst. In diesem Fall kann der Sensor mit dem Sicherheitsmodul über eine interne elektrische Verbindung verbunden sein und das Entriegelungssignal über diese Verbindung an das Sicherheitsmodul übertragen. Alternativ kann das Sicherheitsmodul extern zu der Industriemaschine ausgeführt sein, z.B. als externe Steuerungskomponente oder als Softwarekomponente eines Steuercomputers der Industriemaschine. In diesem Fall ist das Sicherheitsmodul entweder über eine direkte Verbindung oder über ein Netzwerk, z.B. ein LAN (Local Area Network), ein WAN (Wide Area Network), oder das Internet mit der Industriemaschine verbunden und das Entriegelungssignal wird über diese Verbindung von dem Sensor an das Sicherheitsmodul übermittelt.

Das Sicherheitsmodul kann das Steuersignal erzeugen und an eine Steuereinrichtung der Industriemaschine übertragen. Das Steuersignal veranlasst in diesem Fall die Steuereinrichtung der Industriemaschine dazu, die Sicherheitsfunktion auszuführen. Alternativ kann das Sicherheitsmodul auch selbst eine Steuereinrichtung für die Industriemaschine umfassen und das erzeugte Steuersignal löst die Sicherheitsfunktion direkt aus. Je nachdem, ob das Sicherheitsmodul extern oder intern zur Industriemaschine ausgeführt ist, kann das Steuersignal über die entsprechende Verbindung übermittelt werden. Bei interner Ausführung des Sicherheitsmoduls kann das Steuersignal über eine entsprechende interne Signalverbindung an eine Steuereinrichtung oder direkt an die durch die Sicherheitsfunktion kontrollierten Komponenten der Industriemaschine übermittelt werden. Bei externer Ausführung des Sicherheitsmoduls kann das Steuersignal entweder eine direkte Verbindung zur Industriemaschine (z.B. die Verbindung, über die auch das Sensorsignal empfangen wird) oder über die oben beschriebene Netzwerkverbindung entweder an eine Steuereinrichtung der Industriemaschine oder direkt an die durch die Sicherheitsfunktion kontrollierten Komponenten der Industriemaschine übermittelt werden.

Die bewegliche Schutzeinrichtung kann eine Schutzabdeckung der Gefahrenquelle sein, z.B. eine Abdeckung eines Werkzeugs der Industriemaschine, oder eine Seitenabdeckung der Industriemaschine. Die bewegliche Schutzeinrichtung verhindert im geschlossenen Zustand, den körperlichen Kontakt eines Bedieners mit der jeweiligen Gefahrenquelle, so dass eine Verletzungsgefahr, z.B. durch mechanische, elektrische oder thermische Einwirkung der Gefahrenquelle auf den Bediener ausgeschlossen oder zumindest vermindert wird. Eine Industriemaschine kann eine Vielzahl von Gefahrenquellen umfassen. Beispielsweise kann eine Gefahrenquelle ein scharfes Schneidewerkzeug sein oder ein Werkzeug oder eine andere Maschinenkomponente, die während des Betriebs der Maschine eine für einen Bediener schädliche Temperatur aufweist. Auch jede angetriebene bewegliche Komponente kann eine Gefahrenquelle darstellen, beispielsweise Motoren, Getriebe oder entsprechende Werkzeuge (z.B. Press- oder Stempelwerkzeuge).

Die bewegliche Schutzeinrichtung kann die Verriegelungseinrichtung wenigstens teilweise umfassen. Vorzugsweise umfasst eine Verriegelungseinrichtung einen Riegel, der mit einem formschlüssigen Gegenstück eine wieder lösbare Verbindung eingehen kann. Der Riegel kann mit einem Griff und einer entsprechenden Mechanik versehen sein, um ihn mit dem Gegenstück in Eingriff zu bringen, um eine formschlüssige Verbindung herzustellen und diese Verbindung wieder zu lösen. Die Verriegelungseinrichtung kann so ausgestaltet sein, dass die formschlüssige Verbindung im geschlossenen Zustand der Schutzeinrichtung hergestellt werden kann.

Wenn die formschlüssige Verbindung des Riegels mit seinem Gegenstück im geschlossenen Zustand der Schutzeinrichtung hergestellt ist, verhindert die Verbindung eine relative Bewegung der Schutzeinrichtung gegenüber der Industriemaschine. Dann befindet sich die Verriegelungseinrichtung in der verriegelten Stellung. Wenn die formschlüssige Verbindung durch eine entsprechende Bewegung des Riegels wieder gelöst wird, kann die Schutzeinrichtung relativ zum Rahmen der Industriemaschine bewegt werden. Die Verriegelungseinrichtung befindet sich bei gelöster formschlüssiger Verbindung in der entriegelten Stellung. Der Riegel kann mit dem Griff und der Mechanik an der beweglichen Schutzeinrichtung vorgesehen (z.B. befestigt) sein und das formschlüssige Gegenstück kann an einem festen Rahmenteil der Industriemaschine vorgesehen (z.B. befestigt oder ausgebildet) sein, auf dem die Schutzeinrichtung in geschlossenem Zustand aufliegt oder anliegt. Alternativ kann der Riegel an dem Rahmenteil vorgesehen (z.B. befestigt) sein und das formschlüssige Gegenstück des Riegels an der beweglichen Schutzvorrichtung vorgesehen (z.B. befestigt oder ausgebildet) sein.

Die Schutzeinrichtung kann an dem Rahmenteil, an dem sie im geschlossenen Zustand aufliegt, mit einem oder mehreren Scharnieren befestigt sein und sich wie eine Tür durch eine Drehung um das oder die Scharniere, öffnen lassen, wenn die Verriegelungseinrichtung sich im entriegelten Zustand befindet. Alternativ kann die Schutzeinrichtung sich vollständig von der Industriemaschine entfernen lassen, wenn die Verriegelungseinrichtung sich im entriegelten Zustand befindet. In ihrem geöffneten Zustand kann die beweglichen Schutzeinrichtung also noch teilweise an der Industriemaschine befestigt sein oder vollständig von der Industriemaschine entfernt sein. In jedem Fall gewährt die bewegliche Schutzeinrichtung im geöffneten Zustand den körperlichen Zugang zu der Gefahrenquelle und verhindert nicht mehr, dass ein Bediener die Gefahrenquelle berühren kann.

Die Verriegelungseinrichtung kann einen Riegel mit einer Verschlusszunge aufweisen. Die Verschlusszunge befindet sich im verriegelten Zustand der Verriegelungseinrichtung in einer ersten Position. In dieser ersten Position kann die Verschlusszunge beispielsweise in ein Gegenstück eingreifen, um eine formschlüssige Verbindung mit dem Gegenstück herzustellen, um die Schutzeinrichtung daran zu hindern, vom geschlossenen in den offenen Zustand bewegt zu werden. Im entriegelten Zustand der Verriegelungseinrichtung befindet sich die Verschlusszunge in einer zweiten Position. Die zweite Position unterscheidet sich von der ersten Position der Verschlusszunge. Beispielsweise kann die Verbindung zwischen der Verschlusszunge und einem formschlüssigen Gegenstück in der zweiten Position gelöst sein, um die Bewegung der Schutzeinrichtung vom geschlossenen in den offenen Zustand zuzulassen.

Der Sensor kann die Position der Verschlusszunge erfassen, um die Stellung der Verriegelungseinrichtung zu erfassen. Der Sensor kann beispielsweise detektieren, dass sich die Verschlusszunge in der ersten Position befindet, um zu erfassen, dass die Verriegelungseinrichtung sich in der verriegelten Stellung befindet. Der Sensor kann außerdem detektieren, dass sich die Verschlusszunge nicht in der ersten Position befindet, um zu erfassen, dass die Verriegelungseinrichtung sich in der entriegelten Position befindet. Alternativ oder zusätzlich kann der Sensor detektieren, dass sich die Verschlusszunge in der zweiten Position befindet, um zu erfassen, dass die Verriegelungseinrichtung sich in der entriegelten Stellung befindet und/oder dass sich die Verschlusszunge nicht in der zweiten Position befindet, um zu erfassen, dass sich die Verriegelungseinrichtung in der verriegelten Stellung befindet.

Die Industriemaschine kann einen festen Rahmen aufweisen und die bewegliche Schutzeinrichtung kann im geschlossenen Zustand an dem festen Rahmen anliegen oder aufliegen. In diesem Fall kann die Verschlusszunge in der ersten Position in den festen Rahmen eingreifen, um die bewegliche Schutzeinrichtung im geschlossenen Zustand zu halten. Die Verschlusszunge kann in den festen Rahmen eingreifen, indem sie in ein Gegenstück am festen Rahmen eingreift, um eine formschlüssige Verbindung mit dem Gegenstück herzustellen. Das Gegenstück kann am Rahmen befestigt sein oder im Rahmen ausgeformt sein. Wenn die Verschlusszunge in den festen Rahmen eingreift, befindet sich die Verriegelungseinrichtung in der verriegelten Stellung. Die Verschlusszunge kann in der zweiten Position nicht in den Rahmen eingreifen um damit die Bewegung der beweglichen Schutzeinrichtung vom geschlossenen in den offenen Zustand ermöglichen. Wenn die Verschlusszunge nicht in den Rahmen eingreift, befindet sich die Verriegelungseinrichtung in der entriegelten Stellung.

Der Sensor kann eine erste und eine zweite Sensorkomponente aufweisen. Wenn der Riegel an der beweglichen Schutzeinrichtung vorgesehen ist, kann die erste Sensorkomponente an der Verschlusszunge und die zweite Sensorkomponente an dem festen Rahmen befestigt sein. Wenn der Riegel an dem Rahmen vorgesehen ist, kann die erste Sensorkomponente an der Verschlusszunge befestigt sein und die zweite Sensorkomponente an der beweglichen Schutzeinrichtung. Die erste Sensorkomponente ist dabei jeweils an der Verschlusszunge ausgebildet, so dass sie sich mit der Bewegung der Verschlusszunge mitbewegt, während die zweite Sensorkomponente fest an dem Rahmen oder der Schutzeinrichtung angebracht ist. In beiden Fällen kann die zweite Sensorkomponente auch an dem Bauelement angebracht sein, das auch den Riegel aufweist. Zusätzlich kann der Rahmen oder der beweglichen Schutzeinrichtung eine weitere Sensorkomponente aufweisen, die der zweiten Sensorkomponente entspricht, um eine weitere Position der Verschlusszunge separat zu detektieren. Die erste Sensorkomponente kann auch die Verschlusszunge selbst sein.

In jedem Fall wird die erste Sensorkomponente mit der Verschlusszunge mitbewegt, so dass sie in der ersten Position der Verschlusszunge eine andere relative Position zur zweiten Sensorkomponente (oder zu der weiteren Sensorkomponente) hat als in der ersten Position der Verschlusszunge. Beispielsweise kann die erste Sensorkomponente in der ersten Position der Verschlusszunge einen kleineren Abstand zur zweiten Sensorkomponente haben als in der zweiten Position der Verschlusszunge oder umgekehrt. Die erste und die zweite Sensorkomponente können so eingerichtet sein, dass eine physische Nähe der ersten Sensorkomponente zur zweiten Sensorkomponente durch eine Veränderung einer messbaren physikalischen Größe detektiert werden kann. Beispielsweise kann die erste Sensorkomponente in der ersten Position der Verschlusszunge einen Wert einer Kapazität, eines elektrischen Widerstands, einer Induktivität, eines Magnetfeldes, einer Spannung oder eines Stroms in der zweiten Sensorkomponente verursachen, der sich von dem entsprechenden Wert unterscheidet, der in der zweiten Sensorkomponente hervorgerufen wird, wenn sich die erste Sensorkomponente mit der Verschlusszunge in der zweiten Position befindet. Dadurch kann durch eine Messung des entsprechenden Wertes in der zweiten Sensorkomponente detektiert werden, ob sich die erste Sensorkomponente, und damit die Verschlusszunge, in der ersten oder in der zweiten Position befindet. Es können mehrere zweite Sensorkomponenten vorgesehen sein, beispielsweise eine zweite Sensorkomponente für jede der zu detektierenden Positionen der Verschlusszunge. Alternativ oder zusätzlich kann die Veränderung der messbaren physikalischen Größe auch in der ersten Sensorkomponente auftreten und dort gemessen werden. Die zweite Sensorkomponente kann ein elektrischer, magnetischer, mechanischer oder optischer Schalter sein, der durch die erste Sensorkomponente in einer der Positionen der Verschlusszunge ausgelöst wird, um die Position der Verschlusszunge zu detektieren. Bei dem Schalter kann es sich vorzugsweise um einen Magnetschalter handeln. Daneben kann es sich bei dem Schalter auch um einen Näherungs-, Mikro-, oder Nockenschalter handeln.

Der Riegel kann ein Drehriegel sein, bei dem die Verschlusszunge drehbar ist. Die Verschlusszunge kann beispielsweise mittels einer Drehachse drehbar gelagert sein, so dass sie um die Drehachse gedreht werden kann. Alternativ kann der Riegel ein Schieberiegel sein, bei dem die Verschlusszunge verschiebbar ist. Beispielsweise kann die Verschlusszunge entlang einer entsprechenden Führung horizontal und/oder vertikal verschiebbar sein.

Der Sensor erfasst die Stellung der Verriegelungseinrichtung. Beispielsweise kann der Sensor erfassen, dass die Verriegelungseinrichtung sich in der verriegelten Stellung befindet. Wenn die Verriegelungseinrichtung von der verriegelten Stellung in die entriegelte Stellung umgeschaltet wird, kann der Sensor eine Veränderung der Stellung der Verriegelungseinrichtung feststellen und in Reaktion darauf unmittelbar ein Entriegelungssignal erzeugen, das anzeigt, dass die Verriegelungseinrichtung sich nicht mehr in der verriegelten Stellung befindet. Das Entriegelungssignal kann dann verzögerungsfrei (d.h. nur mit der, durch die technischen Gegebenheiten unvermeidbaren Verzögerung) an das Sicherheitsmodul übertragen werden, das daraufhin das Steuersignal ebenfalls unmittelbar erzeugt. Die zeitliche Verzögerung zwischen dem Entriegeln und der Verarbeitung des Steuersignals kann dabei so kurz sein, dass die Verarbeitung des Steuersignals, und damit auch die Ausführung der Sicherheitsfunktion, bereits beginnt, bevor die Schutzeinrichtung vom geschlossenen in den offenen Zustand bewegt wird. Das heißt, dass die Sicherheitsfunktion bereits ausgeführt werden kann, solange die Schutzeinrichtung noch den vollständigen Schutz vor der Gefahrenquelle bietet.

Das Ausführen der Sicherheitsfunktion kann das Ergreifen von Schutzmaßnahmen umfassen, die eine Verletzungsgefahr vermindern, die von der Gefahrenquelle für den Bediener ausgeht. Bevorzugt können die Schutzmaßnahmen ein direktes Einwirken auf Komponenten der Industriemaschine umfassen, die Teil der Gefahrenquelle sind oder mit der Gefahrenquelle in funktionellem Zusammenhang stehen, so dass die Verletzungsgefahr, die von der Gefahrenquelle ausgeht, für einen Bediener der Industriemaschine verringert oder vermieden wird. Besonders bevorzugt führt das Ausführen der Sicherheitsfunktion dazu, dass selbst bei einem physischen Kontakt des Bedieners mit der Gefahrenquelle keine Verletzungsgefahr besteht oder wenigstens eine geringere Verletzungsgefahr besteht als vor der Ausführung der Sicherheitsfunktion. Die geringere Verletzungsgefahr kann unterhalb einer Schwelle liegen, so dass es jedenfalls zu keinen schweren Verletzungen des Bedieners durch den Kontakt mit der Gefahrenquelle kommen kann.

Die genauen Schutzmaßnahmen hängen von der Art der entsprechenden Gefahrenquelle ab. Die Gefahrenquelle kann beispielsweise eine bewegte Komponente der Industriemaschine umfassen, wobei sich eine Verletzungsgefahr für den Bediener aus der Bewegung dieser Komponente ergibt. In diesem Fall kann das Ausführen der Sicherheitsfunktion das Verlangsamen oder das Anhalten der Komponente beinhalten. Das kann etwa durch ein aktives Abbremsen der bewegten Komponente durch Aktivierung einer Bremseinrichtung erreicht werden. Wenn die bewegte Komponente durch einen Antrieb bewegt wird, kann das Anhalten oder das Verlangsamen der bewegten Komponente durch das Anhalten oder das Verlangsamen des Antriebs und/oder das Abbremsen des Antriebs erreicht werden. Dazu kann eine Bremseinrichtung für den Antrieb aktiviert werden. Wenn die Gefahrenquelle durch ein elektrisches Bauteil entsteht, an dem elektrische Kontakte nach Entfernen der Schutzeinrichtung zugänglich sind, kann die Sicherheitsfunktion das Bauteil strom- oder spannungslos schalten, um die Verletzungsgefahr zu vermindern. Falls es sich bei dem elektrischen Bauteil um einen geladenen Kondensator handelt, kann die Sicherheitsfunktion beispielsweise das aktive Entladen des Kondensators umfassen. Wenn die Gefahrenquelle einen Teil eines Gas- oder Vakuumsystems der Industriemaschine umfasst, kann die Sicherheitsfunktion das Öffnen oder Schließen von Ventilen des jeweiligen Systems umfassen. Abhängig von der Gefahrenquelle kann die Sicherheitsfunktion jede Maßnahme umfassen, die dazu beiträgt, eine Verletzungsgefahr für den Bediener zu vermindern oder zu vermeiden. Alternativ oder zusätzlich kann das Ausführen der Sicherheitsfunktion das Auslösen eines optischen und/oder akustischen Alarms umfassen, der den Bediener auf eine erhöhte Gefahr durch das Entriegeln der Verriegelungseinrichtung und das bevorstehende Öffnen der Schutzeinrichtung hinweist.

Im Folgenden werden vorteilhafte Ausführungsformen der Erfindung anhand einer Zeichnung näher erläutert. Im Einzelnen zeigen:
- Fig. 1: ein Ausführungsbeispiel einer erfindungsgemäßen Industriemaschine, die als Tiefziehmaschine ausgeführt ist,
- Fig. 2: ein Ausführungsbeispiel von erfindungsgemäßen Sicherheitskomponenten einer Industriemaschine,
- Fig. 3: ein Ausführungsbeispiel einer erfindungsgemäßen Verriegelungseinrichtung,
- Fig. 4: ein Ausführungsbeispiel eines erfindungsgemäßen Verfahrens zum Betrieb einer Industriemaschine.

Gleiche Komponenten sind in den Figuren durchgängig mit gleichen oder einander entsprechenden Bezugszeichen versehen.

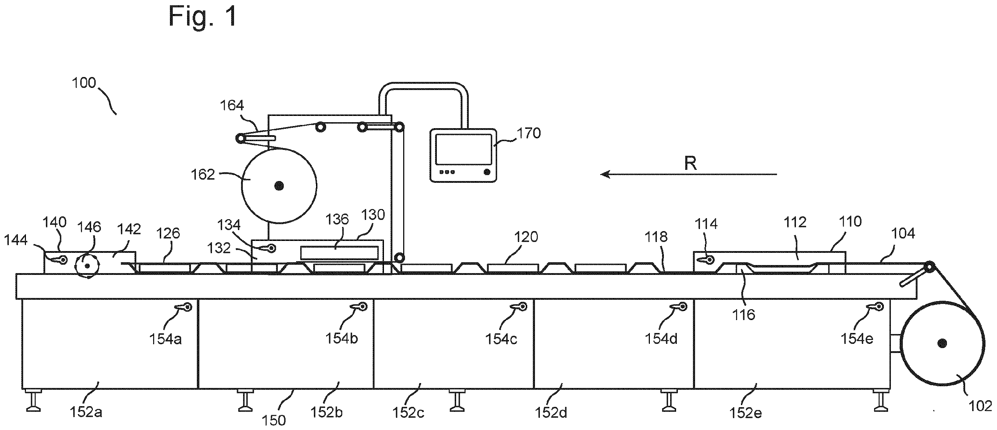

Ein Ausführungsbeispiel einer Industriemaschine gemäß der Erfindung wird anhand einer Tiefziehmaschine 100 unter Bezugnahme auf die Fig. 1 beschrieben. Eine erfindungsgemäße Industriemaschine ist als Verpackungsmaschine oder als Lebensmittelverarbeitungsmaschine eingerichtet und kann selbstverständlich auch in einer anderen Bauart, wie zum Beispiel einer Schalenverschließmaschine, einer Kammerbandmaschine, einer Teigausrollmaschine oder einer Teigverarbeitungsmaschine ausgeführt sein. Jede dieser Industriemaschinen umfasst für einen Bediener gefährliche Werkezuge oder interne Komponenten die Gefahrenquellen für das Bedien- , Wartungs-, oder Einrichtungspersonal darstellen können.

Gemäß der Fig. 1 hat die Tiefziehmaschine 100 u. a. eine Formstation 110, eine Befüllstation 120, eine Evakuier- und Siegelstation 130 und Schneideinrichtungen 140, die in dieser Reihenfolge in einer Bearbeitungsrichtung R an einem Maschinenrahmen 150 angeordnet sind. Eingangsseitig befindet sich an dem Maschinenrahmen eine Zuführrolle 102, von der eine Unterfolie 104 abgerollt wird. Im Bereich der Evakuier- und Siegelstation 130 ist eine zweite Zuführrolle 162 vorgesehen, von der eine Oberfolie 164 abgerollt wird.

Ausgangsseitig ist die Schneideeinrichtung 140 vorgesehen. Ferner weist die Tiefziehmaschine 100 eine nicht dargestellte Vorschubeinrichtung auf, die die Unterfolie 104 seitlich ergreift und taktweise im Hauptarbeitstakt in der Bearbeitungsrichtung weiter transportiert. Die Vorschubeinrichtung kann zum Beispiel durch seitlich angeordnete Transportketten, seitliche Greifer oder Friktionswalzen realisiert werden.

In der dargestellten Ausführungsform werden in der Formstation 110 aus der Unterfolie 104 durch Tiefziehen Packungsschalen 118 geformt. Dazu weist die Formstation 110 ein Formwerkzeug 116 auf. Dabei kann die Formstation 110 derart ausgebildet sein, dass in der Richtung senkrecht zu der Bearbeitungsrichtung R mehrere Packungsschalen 118 nebeneinander gebildet werden. Das Tiefziehen der Packungsschalen wird mit Unterdruck und durch Erhitzen der Unterfolie vorgenommen wird. Im Betrieb der Maschine kann das Formwerkzeug 116 eine Gefahrenquelle für den Bediener darstellen. Um eine Verletzungsgefahr für einen Bediener der Maschine durch den Tiefziehprozess und das Formwerkzeug 116 zu vermeiden, kann die Formstation eine Schutzabdeckung 112 umfassen, die einen physischen Zugriff des Bedieners auf das erhitzte Formwerkzeug 116 verhindert. Eine Verriegelungseinrichtung 114 kann in einer verriegelten Stellung die Schutzabdeckung 112 fixieren, so dass sie nicht von dem Werkzeug abgehoben werden kann.

In der dargestellten Ausführungsform ist die Evakuier- und Siegelstation 130 so ausgebildet, dass die Oberfolie 164 auf einen oberen Rand der Packungsschalen 118 durch Wärme aufgesiegelt wird. Die Evakuier- und Siegelstation 130 ist als eine geschlossene Kammer ausgebildet, in der die Atmosphäre in den Packungen vor dem Versiegeln evakuiert und ggf. durch ein Austauschgas ersetzt wird, wie zum Beispiel CO2 als Schutzgas. Die geschlossene Kammer wird zum Teil durch Schutzabdeckung 132 gebildet, die außerdem den Eingriff des Bedieners auf das Siegelwerkzeug 136 verhindert, das eine Gefahrenquelle für den Bediener darstellen kann. Eine Verriegelungseinrichtung 134 kann in einer verriegelten Stellung die Schutzabdeckung 132 fixieren, so dass sie nicht von dem Siegelwerkzeug 136 abgehoben werden kann.

Die Schneideinrichtung 140 vereinzelt die versiegelten Packungen mittels der Messeranordnung 146. Die Messeranordnung 146 stellt eine Gefahrenquelle für den Bediener dar, deshalb kann der Eingriff des Bedieners auf die Messeranordnung durch eine Schutzabdeckung 142 unterbunden werden. Eine Verriegelungseinrichtung 144 kann in einer verriegelten Stellung die Schutzabdeckung 142 fixieren, so dass sie nicht von der Messeranordnung 146 abgehoben werden kann.

Die Tiefziehmaschine 100 kann eine Bedienungseinrichtung 170 aufweisen, die die Überwachung und Eingabe von Prozessparametern des Verpackungsprozesses ermöglicht. Die Bedienungseinrichtung kann eine Eingabeeinrichtung (z.B. Eingabetasten oder eine Berührungsempfindlicher Bildschirm) umfassen, die die Eingabe von Daten und Befehlen an die Industriemaschine ermöglicht. Außerdem kann die Bedienungseinrichtung eine Anzeigevorrichtung (z.B. einen Bildschirm, etwa ein LCD oder OLED Display) zur optischen Darstellung von Prozessabläufen und/oder Prozessparametern umfassen. Die Bedienungseinrichtung kann auch eine akustische Anzeigevorrichtung (z.B. Lautsprecher) umfassen, um akustische Signale ausgeben zu können.

Der Maschinenrahmen 150 kann einen oder mehrere Seitenabdeckungen 152a, 152b, 152c, 152d, 152e umfassen. Die Seitenabdeckungen 152 verhindern den physischen Kontakt von Personen, die an der Maschine arbeiten mit eventuell gefährlichen Komponenten der Tiefziehmaschine 100. Solche Komponenten können elektrische Bauteile, Motoren, Getriebe, oder Teile der Gas- bzw. Vakuumsysteme der Tiefziehmaschine 100 sein. Diese gefährlichen Komponenten können Gefahrenquellen für Bediener der Maschine darstellen. Die Seitenabdeckungen 152 verhindern daher den direkten körperlichen Kontakt eines Bedieners mit einer entsprechenden Gefahrenquelle, um die Verletzungsgefahr zu verringern. Die Verriegelungseinrichtungen 154a, 154b, 154c, 154d, 154e verhindern in einer verriegelten Stellung, dass die jeweilige Seitenabdeckung von der Tiefziehmaschine 100 entfernt wird.

Im Folgenden wird die Arbeitsweise der Tiefziehmaschine 100 dargestellt.

Die Unterfolie 104 wird von der Zuführrolle 102 abgerollt und durch die Vorschubeinrichtung in die Formstation 110 transportiert. In der Formstation 110 werden durch Tiefziehen der Unterfolie 104 mittels des Formwerkzeugs 116 Packungsschalen 118 gebildet. Die Packungsschalen 118 werden im Hauptarbeitstakt zu der Befüllstation 120 weitertransportiert, in der sie, beispielsweise durch eine menschliche Arbeitskraft oder einen Roboterarm, mit der zu verpackenden Ware befüllt werden. Anschließend werden die befüllten Packungsschalen 118 im Hauptarbeitstakt durch die Vorschubeinrichtung in die Evakuier- und Siegelstation 130 weiter transportiert. Synchronisiert mit dem Vorschub der befüllten Packungsschalen 118 wird die Oberfolie 164 in die Evakuier- und Siegelstation 130 transportiert. In der Evakuier- und Siegelstation 130 wird die Oberfolie 164 auf die Packungsschalen 118 mit Hilfe des Siegelwerkzeugs 136 aufgesiegelt, wobei der Raum zwischen der Unter- und Oberfolie vorher evakuiert und ggf. mit einem Austauschgas ersetzt wurde. Hinter der Evakuier- und Siegelstation 130 werden die versiegelten Packungsschalen 118 mit dem Vorschub der Unterfolie 25 in die Schneideinrichtungen 140 weitertransportiert, in der die Packungen mittels der Messeranordnung 146 vereinzelt werden.

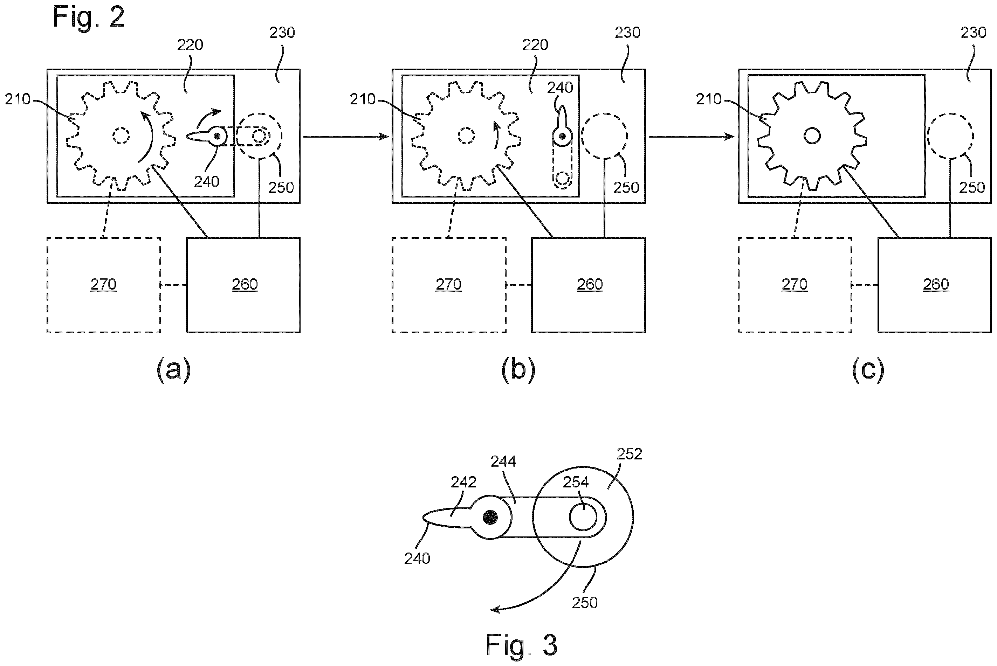

Die Fig. 2 zeigt eine erfindungsgemäße Ausführungsform von Komponenten einer Industriemaschine, z.B. Tiefziehmaschine 100, die zur erfindungsgemäßen Steuerung der Industriemaschine beitragen, um die Verletzungsgefahr für Bediener der Industriemaschine durch Gefahrenquellen der Maschine zu vermindern. Fig. 2 ist in drei, zeitlich aufeinanderfolgende Abschnitte (a), (b), und (c) gegliedert. Im Abschnitt (a) befindet sich eine Schutzeinrichtung 220 (z.B. Schutzabdeckungen 112, 132, 142 oder Seitenabdeckungen 152) in einem geschlossenen Zustand. Die Schutzeinrichtung liegt im geschlossenen Zustand formschlüssig an einem Rahmen 230 der Industriemaschine an (z.B. Rahmen 150), so dass der physische Zugang zur Gefahrenquelle 210 verhindert wird. Im gezeigten Beispiel wird die Gefahrenquelle 210 durch ein angetriebenes Zahnrad, z.B. ein Teil eines Getriebes, dargestellt. Die dargestellte Gefahrenquelle 210 soll hier aber nur als Beispiel dienen und auch stellvertretend für andere mögliche Arten von Gefahrenquellen verstanden werden. Die Gefahrenquelle 210 liegt hinter der Schutzeinrichtung 220, so dass die Schutzeinrichtung 220 im geschlossenen Zustand als Schutzbarriere zwischen einem Bediener, der sich vor der Schutzeinrichtung befindet, und der Gefahrenquelle 210 wirkt.

An der Schutzeinrichtung 220 ist eine Verriegelungseinrichtung 240 angeordnet. Die Verriegelungseinrichtung 240 zusammen mit einem Sensor 250 ist zusätzlich separat in Fig. 3 gezeigt. Die an der Schutzeinrichtung 220 angebrachte Verriegelungseinrichtung 240 umfasst einen Griff 242, der an der Bedienerseite der Schutzeinrichtung angebracht ist. Durch Betätigung des Griffs kann eine Verschlusszunge 244, die an der dem Bediener abgewandten Seite der Schutzeinrichtung 220 angebracht ist, in Eingriff mit dem Rahmen 230 gebracht werden. Wenn die Verschlusszunge in Eingriff mit dem Rahmen gebracht wurde, befindet sich die Verriegelungseinrichtung 240 in der verriegelten Stellung. In Abschnitt (a) der Fig. 2 befindet sich die Verriegelungseinrichtung in der verriegelten Stellung, in der die Position der Verriegelungszunge 244 relativ zum Rahmen 230 verhindert, dass die Schutzeinrichtung 220 von dem geschlossenen Zustand in den offenen Zustand überführt oder umgeschaltet wird. In der verriegelten Stellung der Verriegelungseinrichtung 240 hält die Verrieglungszunge 244 die Schutzeinrichtung 220 in dem geschlossenen Zustand.

Ein Sensor 250 ist so ausgestaltet, dass er detektieren kann, ob die Verschlusszunge 244 im Eingriff mit dem Rahmen 230 ist, was gleichbedeutend ist damit, dass sich die Verriegelungseinrichtung 220 im verriegelten Zustand befindet. Der Sensor 250 besteht aus zwei Komponenten, einer festen Komponente 252, die am Rahmen 230 der Industriemaschine angebracht ist und einer beweglichen Komponente 254, die an der Verschlusszunge angebracht ist. Die Verschlusszunge kann auch selbst als die bewegliche Komponente 254 des Sensors 250 fungieren, ohne dass eine zusätzliche Sensorkomponente an der Verschlusszunge angebracht ist. Die feste Sensorkomponente 252 kann das Vorhandensein der beweglichen Komponente 254 an der Eingriffsposition mit dem Rahmen 230 durch die Messung einer physikalischen Größe (z.B. eines Stroms, eines Widerstands, einer Induktivität, einer Spannung, eines Magnetfeldes) feststellen. Diese physikalische Größe muss dazu in der Eingriffsposition der Verriegelungszunge 244 einen Wert haben, der sich von einem entsprechenden Wert der physikalischen Größe messbar unterscheidet, wenn die Verschlusszunge 244 nicht in der Eingriffsposition ist. Es kann sich bei dem Sensor 250 etwa um einen Magnetsensor handeln. Beispielsweise kann die bewegliche Komponente ein Permanentmagnet sein und die feste Komponente kann die Änderung des Magnetfeldes bestimmen, wenn der Permanentmagnet sich in einer Position befindet, die der Eingriffsposition der Verriegelungszunge 244 und damit der verriegelten Stellung der Verriegelungseinrichtung 240 entspricht. Der Sensor kann ein Positionssignal an das Sicherheitsmodul 260 übermitteln, das dem Sicherheitsmodul anzeigt, dass die Verriegelungseinrichtung sich in der verriegelten Stellung befindet.

Durch Betätigen des Griffs 242 der Verriegelungseinrichtung 240, z.B. durch Drehen des Griffs 242, kann die Verrieglungseinrichtung 240 von der verriegelten Stellung in eine entriegelte Stellung umgeschaltet oder überführt werden. Dabei wird die Verriegelungszunge 244 aus dem Eingriff mit dem Rahmen 230 gelöst.

Im Abschnitt (b) der Fig. 2 ist die Schutzeinrichtung 220 nach wie vor in dem geschlossenen Zustand und die Gefahrenquelle 210 ist noch durch die Schutzeinrichtung 220 von dem Bediener getrennt. Die Verriegelungseinrichtung 240 ist aber bereits in der entriegelten Stellung und die Schutzeinrichtung 220 kann nun von dem geschlossenen in den offenen Zustand überführt bzw. bewegt werden. Beim Umschalten der Verriegelungseinrichtung 240 von der verriegelten in die entriegelte Stellung erzeugt der Sensor 250 ein Entriegelungssignal, das anzeigt, dass sich die Verriegelungseinrichtung 240 aus der verriegelten Stellung in die entriegelte Stellung bewegt hat, bzw. sich nicht mehr in der entriegelten Stellung befindet. Der Sensor 250 übermittelt das Entriegelungssignal an das Sicherheitsmodul 260. Daraufhin erzeugt das Sicherheitsmodul 260 ein Steuersignal, das von der Industriemaschine (z.B. Tiefziehmaschine 100) verarbeitet wird. Das Sicherheitsmodul 260 kann das Steuersignal an eine Steuereinrichtung 270 der Industriemaschine übermitteln, die in Reaktion auf das empfangene Steuersignal selbst Steuersignale an entsprechende Komponenten der Industriemaschine übermittelt, so dass eine Sicherheitsfunktion ausgeführt wird, die die Gefahr für den Bediener, die von der Gefahrenquelle 210 ausgeht, vermindert. Alternativ kann das Sicherheitsmodul 260 selbst Steuersignale an entsprechende Komponenten übermitteln, um die Sicherheitsfunktion auszuführen und damit die Gefahr für den Bediener durch die Gefahrenquelle 210 zu vermindern. Im vorliegenden Beispiel umfasst das Ausführen der Sicherheitsfunktion das aktive Abbremsen des Zahnrades noch bevor die Schutzeinrichtung aus dem geschlossenen Zustand bewegt wird, so dass das Zahnrad sich langsamer bewegt als im Abschnitt (a) der Fig. 2, bevor die Verriegelungseinrichtung 240 in die entriegelte Stellung umgeschaltet wurde.

Nachdem die Verriegelungseinrichtung 240 in die entriegelte Stellung umgeschaltet wurde, kann die Schutzeinrichtung 220 in den offenen Zustand bewegt werden. Beispielsweise kann die Schutzeinrichtung 220 aufgeklappt oder vollständig entfernt werden, so dass die Gefahrenquelle 210 für den Bediener zugänglich ist. Durch das Ausführen der Sicherheitsfunktion bereits unmittelbar nach dem Entriegeln der Verriegelungseinrichtung 240 steht eine längere Zeitspanne zur Verfügung, um Maßnahmen einzuleiten und durchzuführen, die die von der Gefahrenquelle 210 ausgehende Verletzungsgefahr für den Bediener verringern oder ganz vermeiden.

Im Abschnitt (c) der Fig. 2 ist die Schutzeinrichtung 220 entfernt und das Zahnrad ist für den Bediener zugänglich. Eine Verletzungsgefahr besteht aber nicht mehr, da bereits vor dem Umschalten der Schutzeinrichtung in den offenen Zustand mit dem Bremsvorgang des Zahnrades begonnen wurde, so dass das Zahnrad beim Öffnen der Schutzeinrichtung 220 bereits stillsteht. Die konkreten Sicherheitsmaßnahmen, die durch das Entriegelungssignal ausgelöst und durch das Ausführen der Sicherheitsfunktion umgesetzt werden, hängen von der speziellen Art der Gefahrenquelle ab. Die Sicherheitsfunktion kann auch das Erzeugen einer optischen oder akustischen Warnung umfassen, die einem Bediener anzeigt, dass die Sicherheitseinrichtung 220 entriegelt wurde und geöffnet werden kann. Die optische oder akustische Warnung kann beispielsweise von der Bedienungseinrichtung 170 wiedergegeben werden. In jedem Fall führt die frühzeitige Ausführung der Sicherheitsfunktion zu einer verbesserten Sicherheit für die Bediener der Industriemaschine.

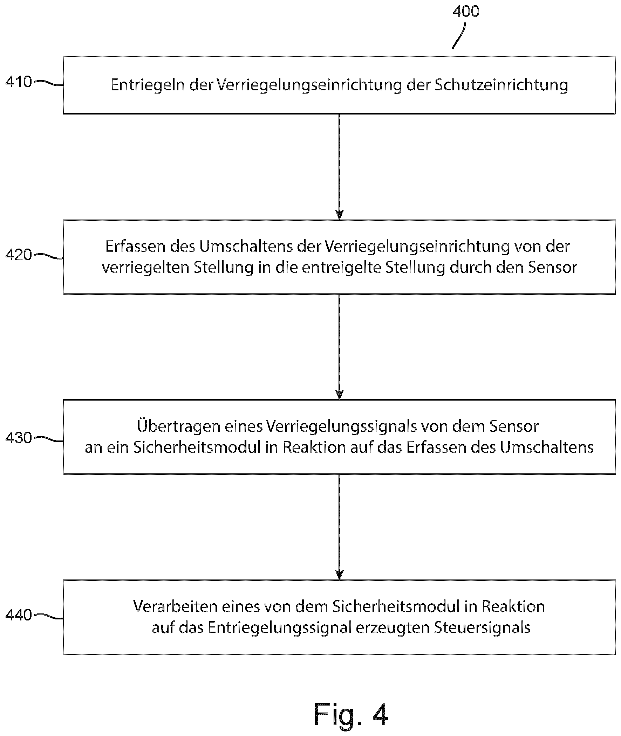

Fig. 4 zeigt ein erfindungsgemäßes Verfahren 400 zum Betrieb einer Industriemaschine, die eingerichtet ist zur Lebensmittelverarbeitung oder als Verpackungsmaschine (z.B. Tiefziehmaschine 100). Die Industriemaschine umfasst eine Schutzeinrichtung (z.B. Schutzeinrichtung 220), eine Verriegelungseinrichtung (z.B. Verriegelungseinrichtung 240), und einen Sensor (z.B. Sensor 250). Die Schutzeinrichtung ist so ausgestaltet, dass sie von einem geschlossenen Zustand in einen offenen Zustand bewegt werden kann. Die Verriegelungseinrichtung ist so ausgestaltet, dass sie zwischen einer verriegelten Stellung und einer entriegelten Stellung umgeschaltet werden kann. Der Sensor ist eingerichtet, um die Stellung der Verriegelungseinrichtung zu erfassen.

Das Verfahren beginnt mit Schritt 410, in dem die Verriegelungseinrichtung entriegelt wird. Die Schutzeinrichtung befindet sich dabei in dem geschlossenen Zustand, in dem ein Bediener der Industriemaschine durch die Schutzeinrichtung von einer Gefahrenquelle der Industriemaschine physisch getrennt ist. Im offenen Zustand der Schutzeinrichtung ist die Gefahrenquelle für den Bediener physisch zugänglich. Das Entriegeln der Verriegelungseinrichtung umfasst ein Umschalten der Verriegelungseinrichtung von der verriegelten Stellung in die entriegelte Stellung. In der verriegelten Stellung hält die Verriegelungseinrichtung die Schutzeinrichtung im geschlossenen Zustand. In der entriegelten Stellung lässt die Verriegelungseinrichtung die Bewegung der Schutzeinrichtung von dem geschlossenen Zustand in den offenen Zustand zu.

Währen des Entriegelns erfasst der Sensor im Schritt 420 das Entriegeln der Verriegelungseinrichtung, also das Umschalten der Verriegelungseinrichtung von der verriegelten Stellung in die entriegelte Stellung. Beispielsweise kann der Sensor die Position einer Verriegelungszunge der Verrieglungseinrichtung bestimmen, um das Umschalten der Verriegelungseinrichtung zu bestimmen.

In Reaktion auf das Erfassen des Umschaltens wird im Schritt 430 ein Entriegelungssignal von dem Sensor an ein Sicherheitsmodul (z.B. Sicherheitsmodul 260) übertragen. Das Entriegelungssignal zeigt an, dass die Verriegelungseinrichtung von der verriegelten in den entriegelten Zustand umgeschaltet wird.

In Reaktion auf das Entriegelungssignal erzeugt das Sicherheitsmodul ein Steuersignal. Im Schritt 440 wird dieses Steuersignal verarbeitet, wobei das Verarbeiten des Steuersignals das Ausführen einer Sicherheitsfunktion umfasst. Das Ausführen der Sicherheitsfunktion kann das Ergreifen von für die Gefahrenquelle geeigneten Maßnahmen umfassen, die eine Verletzungsgefahr, die für einen Bediener durch den physischen Zugang zur Gefahrenquelle entsteht, zu vermindern oder zu beseitigen. Das Steuersignal kann beispielweise von einer Steuereinrichtung der Industriemaschine verarbeitet werden.

## Patentansprüche

1. Industriemaschine (100), die eingerichtet ist zur Lebensmittelverarbeitung oder als Verpackungsmaschine, wobei die Industriemaschine (100) Folgendes aufweist:
eine bewegliche Schutzeinrichtung (112, 132, 142, 152, 220), die von einem geschlossenen Zustand in einen offenen Zustand bewegt werden kann und dazu eingerichtet ist, in dem geschlossenen Zustand einen Bediener der Industriemaschine (100) von einer Gefahrenquelle (116, 136, 146, 210) der Industriemaschine physisch zu trennen;
eine Verriegelungseinrichtung (114, 134, 144, 154, 240), die zwischen einer verriegelten Stellung und einer entriegelten Stellung umgeschaltet werden kann, wobei die Verriegelungseinrichtung (154, 240) dazu eingerichtet ist, in der verriegelten Stellung die bewegliche Schutzeinrichtung (112, 132, 142, 152, 220), im geschlossenen Zustand zu halten und in der entriegelten Stellung die Bewegung der Schutzeinrichtung (112, 132, 142, 152, 220) vom geschlossenen Zustand in den offenen Zustand zuzulassen; und
einen Sensor (250), der eingerichtet ist, die Stellung der Verriegelungseinrichtung (114, 134, 144, 154, 240) zu erfassen und ein Entriegelungssignal an ein Sicherheitsmodul (260) zu übertragen, wenn die Verriegelungseinrichtung (114, 134, 144, 154, 240) von der verriegelten Stellung in die entriegelte Stellung umgeschaltet wird,
wobei die Industriemaschine (100) eingerichtet ist, um ein von dem Sicherheitsmodul (260) in Reaktion auf das Entriegelungssignal erzeugtes Steuersignal zu verarbeiten, wobei das Verarbeiten des Steuersignals das Ausführen einer Sicherheitsfunktion umfasst.

2. Industriemaschine nach Anspruch 1, wobei die Industriemaschine ferner das Sicherheitsmodul umfasst und der Sensor mit dem Sicherheitsmodul verbunden ist.

3. Industriemaschine nach Anspruch 1, wobei sich das Sicherheitsmodul außerhalb der Industriemaschine befindet und direkt oder über ein Netzwerk mit der Industriemaschine verbunden ist.

4. Industriemaschine nach einem der vorhergehenden Ansprüche, wobei das Sicherheitsmodul eingerichtet ist, das Steuersignal zu erzeugen und an eine Steuereinrichtung der Industriemaschine zu übertragen.

5. Industriemaschine nach einem der vorhergehenden Ansprüche, wobei die bewegliche Schutzeinrichtung eine Schutzabdeckung der Gefahrenquelle ist und/oder die Verriegelungseinrichtung umfasst.

6. Industriemaschine nach einem der vorhergehenden Ansprüche, wobei die Verriegelungseinrichtung einen Riegel mit einer Verschlusszunge aufweist, die sich im verriegelten Zustand der Verriegelungseinrichtung in einer ersten Position befindet und im entriegelten Zustand der Verriegelungseinrichtung in einer zweiten Position befindet, die sich von der ersten Position unterscheidet.

7. Industriemaschine nach Anspruch 6, wobei der Sensor die Position der Verschlusszunge erfasst, um die Stellung der Verriegelungseinrichtung zu erfassen.

8. Industriemaschine nach Anspruch 6 oder 7, wobei die Industriemaschine einen festen Rahmen aufweist und die bewegliche Schutzeinrichtung im geschlossenen Zustand an dem festen Rahmen anliegt, wobei die Verschlusszunge in der ersten Position in den festen Rahmen eingreift, um die bewegliche Schutzeinrichtung im geschlossenen Zustand zu halten.

9. Industriemaschine nach Anspruch 8, wobei der Sensor eine erste und eine zweite Sensorkomponente aufweist, wobei die erste Sensorkomponente an der Verschlusszunge und die zweite Sensorkomponente an dem festen Rahmen befestigt ist.

10. Industriemaschine nach einem der Ansprüche 6 bis 9, wobei der Riegel ein Drehriegel und die Verschlusszunge drehbar ist, oder wobei der Riegel ein Schieberiegel und die Verschlusszunge verschiebbar ist.

11. Industriemaschine nach einem der vorhergehenden Ansprüche, wobei die Verarbeitung des Steuersignals beginnt, bevor die Schutzeinrichtung vom geschlossenen in den offenen Zustand bewegt wird.

12. Industriemaschine nach einem der vorhergehenden Ansprüche, wobei das Ausführen der Sicherheitsfunktion das Ergreifen von Schutzmaßnahmen umfasst, die eine Verletzungsgefahr vermindern, die von der Gefahrenquelle für den Bediener ausgeht.

13. Industriemaschine einem der vorhergehenden Ansprüche, wobei die Gefahrenquelle eine bewegte Komponente der Industriemaschine umfasst und sich eine Verletzungsgefahr für den Bediener aus der Bewegung dieser Komponente ergibt, und wobei das Ausführen der Sicherheitsfunktion das Verlangsamen oder das Anhalten der Komponente beinhaltet.

14. Industriemaschine nach Anspruch 13, wobei die bewegte Komponente durch einen Antrieb bewegt wird, und wobei das Anhalten oder das Verlangsamen der bewegten Komponente das Anhalten oder das Verlangsamen des Antriebs und/oder das Abbremsen der bewegten Komponente beinhaltet.

15. Industriemaschine nach einem der vorhergehenden Ansprüche, wobei der Sensor ein Magnetsensor ist.

16. Verfahren (400) zum Betrieb einer Industriemaschine (100), die eingerichtet ist zur Lebensmittelverarbeitung oder als Verpackungsmaschine, wobei die Industriemaschine (100) eine Schutzeinrichtung (112, 132, 142, 152, 220), eine Verriegelungseinrichtung (114, 134, 144, 154, 240), und einen Sensor (250) aufweist, wobei die Schutzeinrichtung (112, 132, 142, 152, 220) von einem geschlossenen Zustand in einen offenen Zustand bewegt werden kann, die Verriegelungseinrichtung (114, 134, 144, 154, 240) zwischen einer verriegelten Stellung und einer entriegelten Stellung umgeschaltet werden kann, und der Sensor (250) eingerichtet ist, die Stellung der Verriegelungseinrichtung (114, 134, 144, 154, 240) zu erfassen, wobei das Verfahren Folgendes umfasst:
Entriegeln (410) der Verriegelungseinrichtung (114, 134, 144, 154, 240), wobei sich die Schutzeinrichtung (112, 132, 142, 152, 220) in dem geschlossenen Zustand befindet und einen Bediener der Industriemaschine von einer Gefahrenquelle der Industriemaschine physisch trennt, wobei das Entriegeln ein Umschalten der Verriegelungseinrichtung (114, 134, 144, 154, 240) von der verriegelten Stellung in die entriegelte Stellung umfasst, wobei die Verriegelungseinrichtung (114, 134, 144, 154, 240) in der verriegelten Stellung die Schutzeinrichtung (112, 132, 142, 152, 220) im geschlossenen Zustand hält und in der entriegelten Stellung die Bewegung der Schutzeinrichtung (112, 132, 142, 152, 220) von dem geschlossenen Zustand in den offenen Zustand zulässt;
Erfassen (420) des Umschaltens der Verriegelungseinrichtung (114, 134, 144, 154, 240) von der verriegelten Stellung in die entriegelte Stellung durch den Sensor (250);
Übertragen (430) eines Entriegelungssignals von dem Sensor (250) an ein Sicherheitsmodul (260) in Reaktion auf das Erfassen des Umschaltens; und
Verarbeiten (440) eines von dem Sicherheitsmodul (260) in Reaktion auf das Entriegelungssignal erzeugten Steuersignals, wobei das Verarbeiten des Steuersignals das Ausführen einer Sicherheitsfunktion umfasst.
